Europäisches Patentamt

European Patent Office

Office européen des brevets

(11) Veröffentlichungsnummer: **0 460 450 A2**

# EUROPÄISCHE PATENTANMELDUNG

(21) Anmeldenummer: 91108235.2

(22) Anmeldetag: 22.05.91

(51) Int. Cl.5: **C08G 85/00**, C08G 75/02, C08G 64/40

(30) Priorität: 02.06.90 DE 4017830

(43) Veröffentlichungstag der Anmeldung:
11.12.91 Patentblatt 91/50

(84) Benannte Vertragsstaaten:
**BE DE FR GB IT**

(71) Anmelder: **BAYER AG**

**W-5090 Leverkusen 1 Bayerwerk(DE)**

(72) Erfinder: **Arlt, Wolfgang, Dr.**
**Schoenwasserstrasse 230c**
**W-4150 Krefeld(DE)**
Erfinder: **Schmidt, Manfred, Dr.**
**Erich-Klausener-Strasse 37**
**W-4150 Krefeld(DE)**
Erfinder: **Fischer, Thomas, Dr.**
**Emil-Feindegen-Strasse 2**
**W-4150 Krefeld(DE)**
Erfinder: **Lange, Ralf, Dr.**
**Bethelstrasse 19**
**W-4150 Krefeld(DE)**

(54) **Verfahren zur Reinigung von Thermoplasten durch Friktionskompaktierung.**

(57) Es wird ein Verfahren zur Reinigung von Thermoplasten beschrieben. Der zu reinigende Thermoplast wird zwischen die Scheiben eines Plastkompaktors eingebracht und durch die bei der Drehbewegung auftretenden Kräfteeinwirkung und Temperaturerhöhung weitgehend von unerwünschten Rückständen aus dem Polymerisationsprozeß befreit.

EP 0 460 450 A2

Die Erfindung betrifft ein Verfahren zur Entfernung von aschebildenden Verunreinigungen, Restlösungsmitteln, Wasser etc. aus einem Thermoplasten.

Hintergrund der Erfindung ist die Tatsache, daß viele Thermoplaste, insbesondere Polyarylensulfid (im folgenden auch PPS genannt) und Polycarbonate, nach der Polymerisation noch von unerwünschten Rückständen befreit werden müssen. Diese Rückstände können insbesondere bestehen aus restlichen Monomeranteilen, Restlösungsmitteln, Wasser und sonstigen Rückständen, die insgesamt als aschebildend bezeichnet werden.

Verfahren zur Reinigung von Thermoplasten, insbesondere Polyarylensulfiden, sind bekannt. So beschreibt beispielsweise DE-37 13 669-A1 ein Verfahren zur Reinigung von Polyarylensulfiden. In dem beschriebenen Verfahren werden die Polyarylensulfide mechanisch durch Preßbänder oder Hochdruckpreßwalzen entfeuchtet. Beim Auspressen des Feuchtigkeitsanteiles nimmt auch der Gehalt an aschebildenden Verunreinigungen stark ab. Insgesamt wird der Feststoffgehalt des PPS dabei auf 50 % bis 95 % erhöht, gleichzeitig sinkt der Gehalt an aschebildenden Verunreinigungen auf unter 0,05 %.

Gereinigtes PPS hat weniger aschebildende Verunreinigungen, spaltet bei seiner Verarbeitung weniger flüchtige Verbindungen ab und verursacht daher weniger Korrosion der bei seiner Verarbeitung eingesetzten Werkzeuge. Außerdem können im PPS verbleibende Verunreinigungen bei der Verwendung der Polyarylensulfide für Anwendungen für elektrische Bauteile stören.

Friktionskompaktoren, wie sie in dem neuen Verfahren eingesetzt werden, sind als Plastkompaktoren auf dem Gebiet der Regranulation bekannt. Sie werden eingesetzt, um aus Kunststoffabfällen wieder verarbeitungsfähiges Granulat zu erzeugen.

Der Erfindung liegt die Aufgabe zugrunde, ein Verfahren zu entwickeln, das mit einfachen Mitteln eine Reinigung frisch polymerisierter Thermoplaste von unerwünschten Rückständen ermöglicht.

Die Aufgabe wird dadurch gelöst, daß der zu reinigende Thermoplast zwischen zwei relativ zueinander rotierbaren Scheiben eingebracht wird und die genannten Rückstände durch die bei der Rotation auf den Thermoplasten wirkenden Kräfte vom Thermoplasten getrennt werden.

Es hat sich gezeigt, daß sich Polymere mit einem hohen Gehalt an Rückständen, wie sie direkt nach der Polymerisation anfallen, unter Verwendung eines Plastkompaktors an sich bekannter Bauart bei gleichzeitiger Schonung des Produktes, d.h. geringer thermischer Belastung, weitgehend von aschebildenden Verunreinigungen, Restfeuchte oder prozeßspezifischen Lösungsmitteln befreien lassen. Durch die bei der Rotation wirkenden Kräfte werden verschiedene Vorgänge in der eingegebenen Substanz bewirkt. Der Thermoplast wird fein zerteilt, weiter wird er durch die Friktion so aufgeheizt, daß unerwünschte Komponenten verdampfen, und drittens wird das Produkt oberflächlich angeschmolzen, so daß kein oder wenig Staub auftritt.

Die Zentrifugalkraft sorgt ferner für eine Trennung der flüssigen Komponenten vom Polymer und bewirkt einen Transport des eingebrachten Materials aus dem Plastkompaktor.

Um die aufgewendete Motorleistung besonders vorteilhaft in einen Wärmeeintrag zu verwandeln, ist es wichtig, die Reibung entsprechend zu beeinflussen. Dies geschieht vorteilhaft durch die Einstellung eines geeigneten Abstands der Scheiben, durch eine schnelle Rotation der Scheiben und durch eine Oberflächenstrukturierung der Scheiben.

Dar Abstand der Scheiben liegt bevorzugt zwischen 1 mm und 5 mm, insbesondere zwischen 2 mm und 4 mm, gemessen am Außenrand der Scheiben.

Die Rotationsfrequenz beträgt bevorzugt zwischen 8 sec$^{-1}$ und 83 sec$^{-1}$.

Die Oberfläche mindestens einer Scheibe, bevorzugt beider Scheiben, ist für jedes Produkt so zu gestalten, daß sich nach Abstellen der Maschine und Betrachtung der Scheiben ein sternförmiges Gebilde auf der Scheibe ergibt, wobei der Mittelpunkt des Sterns im Mittelpunkt der Scheiben liegt und bevorzugt 4 bis 20 Produktstränge wie die Strahlen eines Sternes zum Außenrand der Scheibe führen. Unterhalb von 4 Produktsträngen nimmt die thermische Belastung des Produktes zu, oberhalb von 20 Produktsträngen ist die Aufenthaltsdauer des Materials zwischen den Scheiben zu lang. Bei besonders empfindlichen Polymeren ist es manchmal notwendig, die Scheiben zu kühlen.

Eine weitere bevorzugte Durchführungsform des Verfahrens ist dadurch gekennzeichnet, daß das Einbringen des verunreinigten Thermoplasten mittels eines Schneckenförderers durch ein Loch in einer der Scheiben geschieht, wobei die Drehrichtung des Schneckenförderers gegenläufig zur Drehrichtung des Scheibenpaares eingestellt wird.

Der Einsatz eines Schneckenförderers zum Einbringen des Thermoplasten durch eine mittige Öffnung in der Statorscheibe des Plastkompaktors läßt auf besonders einfache Weise eine kontinuierliche Durchführung des Reinigungsverfahrens zu. Es wurde festgestellt, daß sich das Verfahren besonders vorteilhaft durchführen läßt, wenn der Drehsinn von Schneckenmaschine und Rotorscheibe entgegengesetzt orientiert ist.

Bevorzugt lassen sich mit diesem Verfahren hochtemperaturbeständige Thermoplaste reinigen. Hochtemperaturbeständige Thermoplaste sind solche, die sich auch oberhalb von 280°C noch durch Spritzguß verarbeiten lassen. Insbesondere eignet sich dieses Verfahren zur Reinigung von Polyarylensulfiden bzw. Polyphenylensulfid und Polycarbonaten.

Verzweigtes oder unverzweigtes PPS ist beispielsweise aus US-A 3 354 129 oder EP-A 171 021 bekannt, ebenso sind lineare oder unverzweigte Polycarbonate aus beispielsweise US-3 028 365, US-3 275 601 und der deutschen Offenlegungsschrift 38 32 396 bekannt.

Das neue Verfahren wird im folgenden an zwei Beispielen weiter erläutert. Auf eine besondere Darstellung des Plastkompaktors und einer Granulationsanlage mit Rückführung wurde verzichtet. Die zur Reinigung der Polymerisate verwendete Anlage ist im wesentlichen identisch mit Anlagen wie sie zur Aufbereitung von Abfällen thermoplastischer Kunststoffe und anschließender Granulation verwendet werden. Eine solche Anlage ist beispielsweise in Chemistry and Industry (London), (12), (1973), 559-61 bekannt. Die Verwendung einer Granulationsanlage mit Rückführung besitzt den Vorteil, daß das Polymer nach der Reinigung zu Granulat verarbeitet werden kann. Die Rückführung ermöglicht dabei die Produktion einer einheitlichen Korngröße und garantiert weitgehende Staubfreiheit.

Vergleichsbeispiele sind der bereits erwähnten Schrift DE-37 13 669-A1 zu entnehmen.

Beispiel 1

Feuchtes Polyarylensulfid mit 45 % Restfeuchte (Wasser, prozeßbedingte aromatische und chloraromatische Nebenkomponenten) wurde dem Friktionskompaktor zugeführt.

**Maschinenparameter**

| | |
|---|---|
| Scheibendurchmesser: | 300 mm |
| Scheibenoberfläche: | strukturiert |
| Scheibenabstand: | 2 mm (am äußeren Radius) |
| Drehzahl der Scheiben: | 500 min$^{-1}$ |

**Prozeßparameter**

| | |
|---|---|
| Durchsatz: | 120 kg/h |
| Rückführverhältnis: | 1 |

**Produktparameter**

| | |
|---|---|
| Restfeuchte: | 0,45 % |
| Gehalt an Monomer vorher (p-Dichlorbenzol): | 1.100 ppm |
| Gehalt an Monomer nachher : | 310 ppm |

Das gewonnene Pulver konnte sowohl einer üblichen Behandlung in Vakuum-Schneckenmaschinen als auch der direkten Compoundierung mit weiteren Inhaltsstoffen zum fertigen Verkaufsprodukt zugeführt werden.

Beispiel 2

Feuchtes Polycarbonatpulver (10 % Wasser, 1,4 % n-Heptan, 0,15 % Dichlormethan) wurde dem Friktionskompaktor zugeführt.

Stoffparameter

Gewichtsmittel-Molgewicht $M_w$ des PC-Pulvers: 26690

Zahlenmittel-Molgewicht $M_n$ des PC-Pulvers:    12470

Schüttdichte:                    520 g/l

rel. Lösungsviskosität:          1,268

(gemessen bei 25°C in Dichlormethan bei einer Konzentration von 0,5 Gew.-%).

Maschinenparameter

Scheibendurchmesser:             45 cm

Scheibenoberfläche:              linear strahlenförmig

                                 strukturiert

Scheibenabstand:                 3 mm (am äußeren Rand)

Drehzahl:                        500 $min^{-1}$

Prozeßparameter

Durchsatz:                       100 kg/h

Produktparameter

Wasserfeuchte:                   0,01 Gew.-%

Lösemittelfeuchte:               0,28 % n-Heptan

                                 0,04 % Dichlormethan

Schüttdichte:                    400 g/l

rel. Lösungsviskosität:          1,267

Die Kontaktzeit des Polycarbonates zwischen dem Scheibenpaar des Apparates betrug etwa 1/10 sec. Hierbei wurde das Polycarbonat kurzzeitig auf die Glasübergangstemperatur $T_G$ von 148°C erwärmt. Das nach diesem erfindungsgemäßen Verfahren, produktschonend weitgehend von Wasser und Restlösungsmitteln, befreite Polycarbonat wurde anschließend auf einem Vakuumextruder (Typ: ZSK 58, Hersteller: Werner & Pfleiderer, Stuttgart, West-Germany) zu Granulat extrudiert. Man erhält hierbei ein Polycarbonat mit folgenden Produktkennzahlen:

4

EP 0 460 450 A2

Relative Viskosität:     1,267

Wassergehalt:            0,01 Gew.-%

Lösungsmittelgehalt:     10 ppm n-Heptan, <2 ppm
                         Dichlormethan

Natriumionen:            <1 ppm

Chlorionen:              <2 ppm

Gewichtsmittel-Molgewicht $M_w$ des PC-Granulats: 26670

Zahlenmittel-Molgewicht $M_n$ des PC-Granulats:     13080

**Patentansprüche**

1. Verfahren zur Entfernung von aschebildenden Verunreinigungen, Restlösungsmitteln, Wasser etc. aus einem Thermoplasten, dadurch gekennzeichnet, daß der Thermoplast zwischen zwei relativ zueinander rotierbaren Scheiben eingebracht wird und die genannten Rückstände durch die bei der Rotation auf den Thermoplasten wirkenden Kräfte vom Thermoplasten getrennt werden.

2. Verfahren nach Anspruch 1, dadurch gekennzeichnet, daß die Rotationsfrequenz zwischen 8 $sec^{-1}$ und 83 $sec^{-1}$ liegt.

3. Verfahren nach den Ansprüchen 1 bis 2, dadurch gekennzeichnet, daß Scheiben mit Oberflächenstrukturierung verwendet werden.

4. Verfahren nach den Ansprüchen 1 bis 3, dadurch gekennzeichnet, daß das Einbringen des verunreinigten Thermoplasten mittels eines Schneckenförderers durch ein Loch in einer der Scheiben geschieht, wobei die Drehrichtung des Schneckenförderers gegenläufig zur Drehrichtung des Scheibenpaares eingestellt wird.

5. Verfahren nach den Ansprüchen 1 bis 4, dadurch gekennzeichnet, daß als Thermoplaste hochtemperaturbeständige Thermoplaste, insbesondere Polyarylensulfide (PPS) oder Polycarbonate (PC) verwendet werden.